# EUROPEAN PATENT SPECIFICATION

(11) **EP 4 417 927 B1**
(45) Date of publication and mention of the grant of the patent: **12.08.2026**
(21) Application number: 23382144.6
(22) Date of filing: 15.02.2023
(51) Int. Cl.: F28F 9/02, F28F 1/02

(54) **HEAT EXCHANGE MODULE**
WÄRMETAUSCHERMODUL
MODULE D'ECHANGE DE CHALEUR

(43) Date of publication of application: 21.08.2024
(73) Proprietor: BORGWARNER EMISSIONS SYSTEMS SPAIN, S.L.U., 36315 Vigo Pontevedra (ES)
(72) Inventor: FONTÁN MARTINEZ, Lidia María, 36204 Vigo (ES); CARBALLIDO, Román, 36205 Vigo (ES); ABELAIRAS, Óscar, 36209 Vigo (ES); HERMIDA, Xoan, 36380 Gondomar (ES)
(74) Representative: ABG Intellectual Property Law, S.L.

(56) References cited:
- FR-A1- 2 860 287
- FR-A1- 3 125 636
- JP-A- S61 191 889
- US-A1- 2002 179 291
- US-A1- 2017 162 922

## Description

### OBJECT OF THE INVENTION

A first aspect of the invention is a heat exchange module comprising a manifold and a heat exchange tube, the tube configured to carry out the cooling of an electrical or electronic element by making use of a "U" flow, that is, with an outflow and a return flow such that the supply and outlet of the fluid are located at one end of the tube.

The manifold is configured to allow fluidic connection between the forward flow and return flow in the "U" flow at the end of the heat exchanger tube. The manifold allows for a change of flow direction with improved pressure drop. The tube is additionally configured to establish a proper coupling to the manifold.

An embodiment of the invention is a heat exchange module comprising one or more heat exchange tubes incorporating an end manifold. The tube allows by stacking to constitute a heat exchanger formed by a plurality of modules suitable for heat exchange of a battery of cells.

### BACKGROUND OF THE INVENTION

The electric vehicle and its growing demand give rise to a set of new technical challenges that require effective solutions, especially in all aspects related to energy storage.

Among other challenges, the use of batteries to store electrical energy requires control techniques to optimize the charging and discharging of the cells to extend their useful life as much as possible.

However, an equally or more important aspect than load management in a set of cells is the operating temperature that they must maintain both in use and in storage conditions. In use conditions, the cells generate heat that must be dissipated so that its temperature does not rise excessively, degrading parts of the cells or their environment, or even avoiding the melting of some of its parts or deflagration. In storage conditions the external temperature can become very low causing the cells to reach temperatures at which their performance drops drastically or even stop working, preventing recharging due to a drastic rise in internal impedance.

In the first case it is necessary to remove the heat generated and in the second case it is necessary to provide heat to prevent the temperature from dropping below the minimum operating temperature.

In both cases it is necessary to exchange heat with each of the cells with an external heat source or heat sink. In most cases it is necessary to interpose heat exchange tubes in contact with the cells so that a cooling liquid acts as a transport vehicle for the heat exchanged with the cell.

The use of flat heat exchange tubes is an effective solution because they allow to adapt to the shape of the cells, for example when they are of prismatic configuration. The same is true for cylindrical cells if the tube has curved sections that are close to the cell surface to maximize the contact region.

Hereinafter, a flat tube is considered to be a tube whose configuration according to a cross-section extends along a trajectory, preferably straight. That is, the tube extends essentially in two dimensions, a longitudinal dimension and a transverse dimension, with a small thickness compared to either of the two main dimensions.

The transverse path allows to generate a ruled surface where the cross section is a preferably straight guideline and the surface is generated by the displacement of the guideline along two generatrices spaced from each other on which the guideline is supported. The generatrices can be straight or even sinuous for example giving rise to a wavy surface capable of adapting to cylindrical surfaces located on either side of the flat tube having the shape of the generated surface. That is, the flat tube has as its mean principal surface the one generated as described above. A specific case of flat tube is the one showing a straight or sinuous band shape.

Preferably, the thickness of the flat tube is at least one order of magnitude smaller than the length of the transverse path; that is, than the width of the tube.

If the generatrices are straight then the flat tube is bounded mainly by two parallel planes.

When the flow supply and return flow evacuation of the flat tube should be located at the same end of the tube then it is necessary to establish at least one flow channel and one return channel so that, through a manifold located at the opposite end to the supply and return flow outlet, it is possible to communicate both channels causing a flow with a "U" trajectory. In addition, the manifold that allows the inlet and outlet must also differentiate in its connection between the inlet channel(s) and the outlet channel(s).

It is said one or more inlet channels or, one or more outlet or return channels because the flow conduit and the outlet or return conduit in some embodiments are formed by a plurality of channels arranged parallel such that the flow rate in one conduit is the sum of the flow rates in the channels forming that conduit.

It is known the US patent application nº US2002/179291A1 disclosing an evaporator and a method for making the same.

It is also known the JP patent application nº JP S61 191889 A disclosing a heat exchanger using a flat tube.

The invention according to a first inventive aspect is a specific design of a heat exchange module having a manifold located at the end. This manifold has a configuration that avoids the problem of a communication between the flow conduit and the return conduit resulting in lower head losses. Additionally, its configuration also allows a manufacturing with a very reduced number of operations which also implies a reduced amount of resources in its manufacture.

### DESCRIPTION OF THE INVENTION

The invention is a heat exchange module according to claim 1 comprisinga manifold for a heat exchange tube and the tube.

The manifold is adapted to be attached to a flat configuration tube. The tube is configured with a first flow conduit located on one side of the tube and with a second return flow conduit located on the other side of the tube, the first conduit and the second conduit spaced apart by means of an intermediate section, the manifold being suitable for bringing the first flow conduit into fluidic communication with the second return conduit of the tube.

The manifold of the heat exchange module of the invention comprises:
- *a first part configured by deformation of a sheet metal;*
- *a second part configured by deformation of a sheet metal, attached to the first part;*

*wherein the manifold comprises*
   - *an inlet port configured to receive the first conduit for the outgoing flow; and;*
   - *an outlet port configured to receive the second conduit for the return flow;*
*and wherein the manifold comprises a channel formed either by expansion of the first piece, or by expansion of the second piece, or by expansion of both pieces, wherein the channel communicates the inlet port with the outlet port.*

The manifold is an element whose function is to transfer a fluid, according to the main application a cooling fluid, between two conduits, the first conduit and the second conduit. In operational mode the cooling fluid flows in the flow direction through the first conduit of a tube and the manifold redirects it to the second conduit of the same tube to establish the return flow path in such a way that in this transfer process there is no fluid leakage due to a leakage failure and, in addition, the pressure loss is minimal.

The flow configuration is said to be "U" shaped since the same flow goes and returns through the same tube.

In addition to these problems additionally the manifold of the invention, allows a manufacture that requires few resources in its manufacture and results inexpensive.

The manifold comprises an inlet port configured to receive the first conduit for the inlet flow and, an outlet port for the return flow; that is, when the manifold is attached to the heat exchange tube the connection is established at two different locations.

That the inlet port receives the first conduit should be interpreted to mean that the inlet port is coupled to the first conduit through a seating surface between the two. It will be the surface on which the joint between parts is established. The same applies to the second conduit and the outlet port.

In preferred examples the seating surface at the inlet port of the manifold is internal so that the first conduit partially enters the inlet port and, the seal is established between a perimeter and internal seating surface of the inlet port and an external perimeter surface of the first conduit. Preferred examples of joining that further ensure sealing are by brazing or by melting using the flux surface of the sheet when it is formed by a plate identified as a cladding sheet. Another example of bonding is by the interposition of an adhesive between the surfaces to be joined.

A cladding sheet is a metal sheet containing on one side a layer with a lower melting point than the rest of the sheet. This face, when in contact with another surface and also subjected, for example, in a furnace, to a temperature above the melting temperature of the lower melting point layer, but below the melting temperature of the rest of the sheet, only this layer is melted, thus achieving a weld joint with the surface that is in contact with the part to be joined.

The same as described for the inlet port applies to the outlet port and its connection to the second conduit of the heat exchanger tube.

The manifold further comprises a channel that connects the inlet port and the outlet port. That is, in operational mode the channel has the function of receiving the flow coming through the first conduit and is conveyed to the second conduit. The channel is formed by an expansion that increases its section to reduce the pressure loss. Expansion will be interpreted to mean a deformation of the sheet metal, preferably according to a direction transverse to the sheet metal, by stamping and which gives rise to an internal volume when the part is joined to the other part. The reproduced shape based on a plate-shaped configuration with a deformation perpendicular to the plate and in which an internal volume is generated will also be identified as expanded, even if it is reproduced in a molded material such as plastic.

The manifold is configured by two pieces where the final configuration is obtained by joining one and the other piece. This configuration allows the manufacturing of the first part and the second part by stamping, which results in a very cheap manufacturing with very short forming times. The channel is configured by means of an expansion and this expansion can be entirely in one of the parts or, in both parts. According to a preferred example, the expansion is in both parts resulting in a symmetrical configuration with respect to a plane containing the flat tube or, very close to the symmetrical configuration.

According to an embodiment, *the first piece comprises a first perimeter seat and the second piece comprises a second perimeter seat wherein the first perimeter seat is attached to the second perimeter seat establishing sealing in a perimeter zone of the manifold.*

According to this example of realization, the joint between parts must be made mainly around the channel except at the junction with the first conduit and the second conduit which may require specific configurative aspects. In the perimeter area a seat has been established in each of the pieces configured so that such seats have the surfaces in contact and allow the mutual union for example by welding.

The two seats create a bonding surface that ensures watertightness, not only along a line.

According to an embodiment *the manifold comprises a contact region in which a first intermediate area of the first part is joined to a second intermediate area of the second part; and wherein,*
- *the contact region is configured to be at least partially lodged in the recessed end of the intermediate section of the tube.*

This example is suitable for a heat exchange tube in which at its end, the end where the manifold according to any of the examples of the invention is located, has a notch between the first conduit and the second conduit. The notch is preferably in an intermediate section of the tube, the intermediate section keeping the first conduit and the second conduit structurally connected and keeping them adjacent but spaced apart.

The notch leaves a free space between the ends of the first conduit and the second conduit. It is in this space that the first piece and the second piece also have a region where they are joined. It is this region that separates the surfaces where either the first piece or the second piece is attached to one end of the tube. In this way, this contact region establishes an element that interposes itself between the two junctions where fluid leakage can occur and at least prevents a fluid bypass that does not pass through the manifold channel. Bypass in this context will be interpreted as the establishment of a shorter path for the fluid that makes it more favorable and prevents the entire fluid from going through the pre-established path.

Its position is such that it takes advantage of the notch to have space where the first piece and the second piece contact and are joined together.

According to another embodiment applicable to any of the examples described above, *the channel is configured by the expansion of both the first piece and the second piece both being expanded coincidentally according to a projection on a plane of union of the first piece and the second piece to configure between them a channel.*

According to this example of realization the channel is formed by the expansions of the two pieces resulting in a volume that does not force the incoming or outgoing fluid to have a velocity component perpendicular to the plane defined by the flat tube at its end. In this way the velocity field of the flow that in operational mode flows through the channel has the lowest vorticity at least in the direction of the channel since this vorticity would increase the viscous dissipation in the cooling fluid and therefore the pressure drop.

Likewise, this configuration distributes the necessary deformation in the sheet metal of the first part and in the sheet metal of the second part when they are manufactured by stamping, reducing the probability of breakage or the appearance of cracks that would lead to a subsequent leakage of the fluid.

According to another embodiment applicable to any of the examples described above, *wherein the length of the channel is greater than the width of the tube.*

The flow path through the first conduit is oriented in the direction of the tube until it enters the channel. The main flow direction of the channel is transverse to the tube until it reaches the second conduit through which it returns also according to the direction of the tube.

According to this embodiment the length of the channel is greater than the width of the heat exchange tube measured between the points furthest from the outer surface of the tube. The width of the channel is to be interpreted as the length measured in the transverse direction taking as reference the longitudinal direction of the end of the heat exchange tube in operating mode when attached to the manifold and, said measurement taken between the furthest points of the volume formed between the first piece and the second piece to give rise to the channel, it being understood that the volume is formed in areas affected by an expansion and where both pieces are separated.

When the joining between the two parts is carried out by brazing or by using cladding sheets, the passage through the furnace to melt the lower melting point metal causes a migration of the metal into the channel. This migration can also occur in an adhesive if this is how the parts are joined.

This migrating material migrates inward, occupying part of the volume and in particular in a region near the junction of the end of the first duct or the second duct. In this area is close to the inner lumen of the duct so that the migrating material can enter the duct. This fact is particularly detrimental when the duct is formed by a plurality of channels since small quantities of migrated material can totally occlude one or more channels, which drastically reduces the efficiency of the heat exchange tube since it is no longer effective in the width of the affected channel but along the entire length of the tube.

The configuration according to this example of realization avoids this problem since the greater length of the channel determines a space that is able to accommodate migrated material without it reaching the entrance of any of the conduits and, in particular of channels if the conduit is formed by channels.

According to another exemplary embodiment applicable to any of the examples described above, *at least the first piece comprises flanges that embrace the second seat of the second piece.*

According to this example of realization at least one piece has tabs so that, after positioning the first piece and the second piece in their final relative position, the tabs, once bent, establish a temporary retention that allow a passage through the oven to reach the weld without the need for a tooling that keeps them fixed in such final position. The same if the joint is by adhesive, the temporary joint would allow the curing of the adhesive reaching the final joint. According to a more specific example both the first piece and the second piece have tabs that allow the temporary retention when bent towards the other piece.

One of the most critical points to ensure watertightness in the manifold formed by two pieces is the area of the junction with either of the two conduits, the first conduit or the second conduit, also coinciding with the junction between the first piece and the second piece.

The first piece, in this area, has a surface that is attached to the second piece and, after a radius of transition, extends according to another surface that is attached to the conduit, the first or the second. The same applies to the second piece.

The radius of transition, not being a sharp edge, does not adhere to two surfaces that meet or intersect in a line resulting in a space not occupied by the material of any of the pieces or the conduit wall. This space configures a channel through which the fluid leaks unless it is occluded by the material that melts in the joint by welding or by the adhesive if this is the mode of union. When the radius of transition is present in the first piece and in the second piece the dimensions of the channel that gives rise to fluid leakage are still larger and require more material for its occlusion.

On the contrary, according to this example of realization a section of this channel has a section either reduced or even totally occluded by the presence of a plastic deformation resulting from a local stamping operation aimed at the reduction of the radius of transition. A specific way of obtaining this section is by the addition of inserts in the sheet metal stamping die in such a way that, after stamping, these inserts generate an additional local stress causing the plastic deformation of the material.

It is understood that this plastic deformation process allows the reduction of the radius of curvature to the limits imposed by the material used. However, radii of curvature which have been found suitable in this embodiment are less than 1mm or more preferably less than 0.5mm, or more preferably less than 0.2mm, or more preferably less than 0.1mm for sheets with a thickness between 0.5mm to 2mm.

The inlet direction of the inlet port is to be interpreted as the longitudinal direction of the end of the conduit entering the port. According to this direction one has essentially the direction of the channel that naturally forms when no narrowing is established by plastic deformation along a span.

According to this more specific example of realization than the previous one, the section with plastic deformation that reduces the section of the channel through which the fluid would leak is smaller than the distance of the seat configured for joining with the pipe so that at the internal end where the section with plastic deformation ends there is a space into which the material that melts during the passage of the oven can migrate when a brazing or clad welding is carried out, or into which an adhesive can migrate if this is the joining method.

Not only is it a suitable space for this excess material to migrate in the bonding process, but it does so in the outer zone of the canal, preventing the migration of the excess material from reaching the entrance of the canal, thus favoring its occlusion.

The tube of a heat exchange module according to the invention comprises:
- *a first conduit with a flat configuration according to its cross section;*
- *a second conduit with a flat configuration according to its cross section;*
*wherein the first conduit and the second conduit are arranged adjacent to each other and mechanically joined by means of an intermediate section configuring a tube of planar configuration according to its cross section wherein the tube extends longitudinally between a first end and a second end according to a trajectory.*

The tube has two conduits, the first conduit and the second conduit, allowing the passage of two differentiated flows, the outflow and the return flow respectively.

According to the configuration of the tube, the two conduits are separated by the presence of an intermediate section that keeps the first conduit and the second conduit adjacent and joined.

The "U" flow configuration is due to the fact that the inlet flow introduced into the first conduit at the first end of the tube reaches the second end and is redirected to the second conduit to return again from the second end of the tube to the first end. The flow path is therefore "U" shaped.

The flow at the second end of the tube, according to a preferred example of the invention, is redirected from the first conduit to the second conduit through a manifold that fluidically communicates both conduits.

The tube follows a trajectory which in preferred examples is either straight or corrugated with curved sections. The shape of the tube is such that it conforms to the shape of the cells or elements with which heat is to be exchanged favoring intimate contact and thus favoring heat transfer by conduction.

According to the invention, *at least one end of the tube has a configuration adapted to be attached to a manifold that is configured to exchange fluid with the first conduit and with the second conduit, wherein:*
- *the intermediate section has its end recessed from an end of the first conduit and recessed from an end of the second conduit such that the end of the first conduit and the end of the second conduit have a perimeter area separated from the end of the intermediate section and configured for connection to the manifold.*

The configuration of one end of the tube intended to join with a manifold shows the intermediate section recessed with respect to both the first conduit and the second conduit; that is, the first conduit and the second conduit project beyond the intermediate section thus generating two projections.

Each of these projected portions is separate and supports a differentiated joint without any leakage of coolant resulting in fluid exchange between the first conduit and the second conduit.

According to an embodiment, *the perimeter area is continuous along a perimeter path.*

The portions of the first conduit and of the second conduit projecting beyond the intermediate section each show a perimeter area which, according to this example of realization is free of interruptions admitting a continuous contact at least along a perimeter trajectory contained in the perimeter area with an antagonistic or complementary surface of the manifold with which it is joined. That is, it is possible to establish a closed trajectory limited to not going out of this area destined to the junction. This condition has the effect of preventing leakage of fluid to the outside through the junction and results in the fluid circulating only through the conduits and the channel which are the means intended for that purpose.

In the above cases, the perimeter area is an area located on the outer surface of the tube.

According to an embodiment of the tube applicable to any of the examples described above, *the path of the tube is either straight or corrugated.*

A straight trajectory, when the cross section is also straight, allows for example a good contact with prismatic cells since the lateral surfaces of the tube are flat.

When the trajectory is wavy the tube shows an alternation between a section with a concave curvature towards one side of the tube and then a section with the concave curvature towards the other side so that the tube has the ability to girdle the cylindrical surface of cells which are arranged alternately on one and the other side of the tube. This arrangement is suitable in cells with a high degree of packing between those between which the tube extends and those with which they exchange heat.

According to an embodiment of the tube applicable to any of the examples described above, *wherein the first conduit, the second conduit or both conduits comprise a plurality of internal channels.*

When a conduit, the first conduit or the second conduit, has a high width the aspect ratio is very high and can result in tube surfaces that, when subjected to perpendicular force, do not have sufficient strength.

A first situation where the tube receives perpendicular stresses is during manufacturing if the tube is subjected to a bending or stamping operation. This is the case in the manufacture of a corrugated flat tube when it is obtained from a straight flat tube manufactured for example by extrusion. The flat tube is subjected to a deformation force, for example, imposed by two molds placed in opposition and having the corrugated shape. The deformation force applied perpendicularly on a pipe without a plurality of channels would cause the collapse of the conduit by strangling its section. On the contrary, the presence of a plurality of channels separated by internal walls gives rise to a conduit with longitudinal reinforcements that structurally connect the conduit walls on one side and the other side of the pipe giving rise to a structural reinforcement. This reinforcement is able to withstand these deformation stresses applied mainly in a direction essentially perpendicular to the surface of the pipe.

A second technical effect resulting from the use of a plurality of internal channels is the resistance of the tube to deformations due to pressure differences between the inside and outside of the tube. For example, if the tube is subjected to a pressure higher than the external pressure, the internal walls separating the internal channels prevent the expansion of the walls as would occur if the internal channels were not present.

According to an embodiment of the heat exchange module *the first conduit, the second conduit or both conduits have a cross-section bounded by two parallel straight lines separated from each other and connected at their ends by two curved sections.*

A cross section delimited by two parallel straight lines allows a suitable contact in prismatic bodies when the longitudinal path of the tube is straight or, in curved bodies such as cylindrical ones when the longitudinal path of the tube is wavy. In this case the mean surface that defines the shape of the tube is ruled where the directrix is straight.

The curved ends avoid the presence of edges which, in an environment where potential differences are high, could generate discharge arcs causing damage to the battery or to some of the cells. These arcs could even cause the metal to melt somewhere in the battery and in particular in the conduits of the tube, releasing the coolant in this environment with high electrical potentials with the danger that this entails.

According to the invention, *either the end of the first conduit, or the end of the second conduit, or both ends go into the interior of the manifold channel* result *in a cantilevered section to avoid at least partial occlusion of the conduit(s).* It has been observed that this solution is very effective when there is migration of molten material or adhesive, depending on the joining method, at the junction joints that would otherwise migrate into the interior of one or both of the ducts. It is especially effective when the conduit (s) are made up of a plurality of channels since the reduced section of the channels is quickly occluded no matter how little material migrates occluding its entry. Once a channel is occluded heat exchange ceases to occur along the entire length of the tube for the region corresponding to that channel.

According to the invention, this type of occlusion is avoided.

### DESCRIPTION OF THE DRAWINGS

These features and advantages of the invention will become more clearly apparent from the following detailed description of a preferred form of embodiment, given by way of illustrative and non-limiting example only, with reference to the accompanying figures.
- Figure 1: This figure shows an embodiment of the heat exchange module comprising a tube and a manifold .
- Figure 2: This figure shows the same example of realization of the manifold seen in the previous figure, this time alone, according to a perspective view where the first piece is located in a lower position.
- Figure 3: This figure also shows the same example of realization of the manifold seen in the previous figure, this time according to a slightly more inclined perspective view where the first piece is located in an upper position to allow to have visual access from the other side of the manifold.
- Figures 4 and 5: These figures show the first part and the second part respectively of the embodiment of the manifold of the previous figures viewed from a position where the inner surfaces of the manifold are visually accessible.
- Figure 6: This figure shows the same manifold shown in a plan view and with a schematic representation of the heat exchange tube using dashed lines to allow showing the relative positions of the elements that make up the various components involved in joining the tube and the manifold.
- Figure 7: This figure shows a detail of the junction of the tube of the realization example shown in Figure 1 and the manifold also according to the realization example of the previous figures seen from the near side of the tube to allow to see the configuration of its insertion through the inlet port and the outlet port.
- Figure 8: This figure shows the same image as in the previous figure where the second piece has been removed to allow visual access to the end of the tube when it is housed in its operating position inside the manifold.
- Figure 9: This figure shows the same configuration as the previous figure only from the opposite side to allow visual access to the channels forming the first pipe conduit and the second conduit and their position with respect to the manifold channel.

### DETAILED DESCRIPTION OF THE INVENTION

The present heat exchange module of the invention comprises a manifold (1) which allows its attachment to the end of a heat exchange tube (2) in such a way that, the tube (2) comprising two conduits, one going and one returning, results in a configuration which we call "U". That is, the tube (2) allows a flow of a cooling liquid in a flow direction and, after reaching its end, to exit and be redirected again by the manifold to the other conduit carrying the same flow as a return flow. A broken line with arrowheads shows the "U" configuration of the main flow path as it arrives through the tube (2) at the manifold (1) and returns again through the other tube conduit (2).

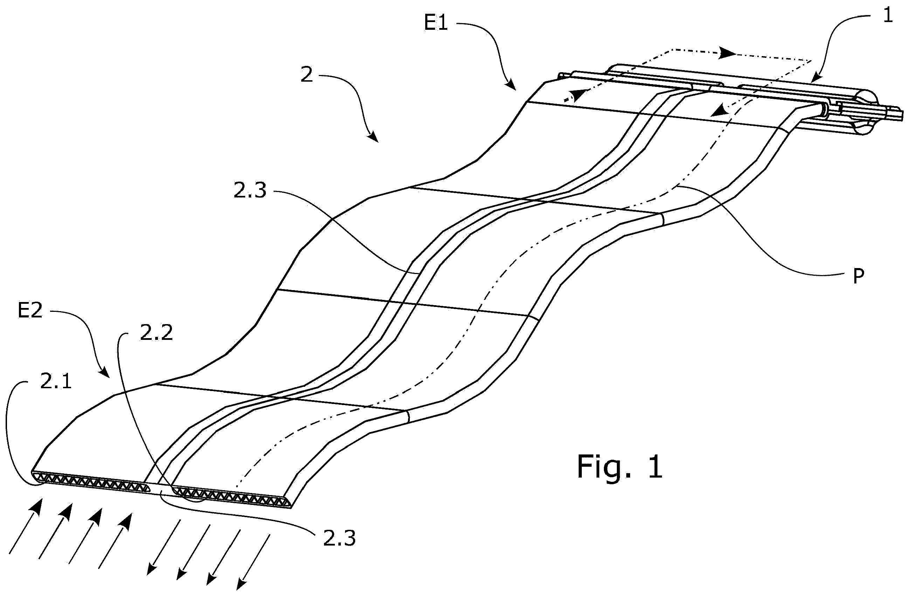

Referring to figure 1, this figure shows in perspective a tube (2) according to an example of realization comprising a first conduit (2.1) and a second conduit (2.2), both conduits formed by a plurality of channels distributed in parallel and separated by walls that make them watertight between them.

The first conduit (2.1) and the second conduit (2.2) are separated and spaced apart by an intermediate section (2.3). The intermediate section (2.3) in this case is a section without channels that joins the first conduit (2.1) and the second conduit (2.2) structurally forming as a whole a flat tube (2). It is a flat tube (2) because the thickness dimension is appreciably smaller than the other dimensions, width and length, in particular the width of the tube (2). The configuration shown is that of a flat tube (2) extending along a corrugated path in a longitudinal direction.

A broken line with arrowheads shows the "U" configuration of the main flow path as it flows through the tube (2) to the manifold (1) and back through the other pipe conduit (2).

The references E1 and E2 have been used to identify the end (E1) of the tube (2) connected to the manifold (1) and the opposite end (E2).

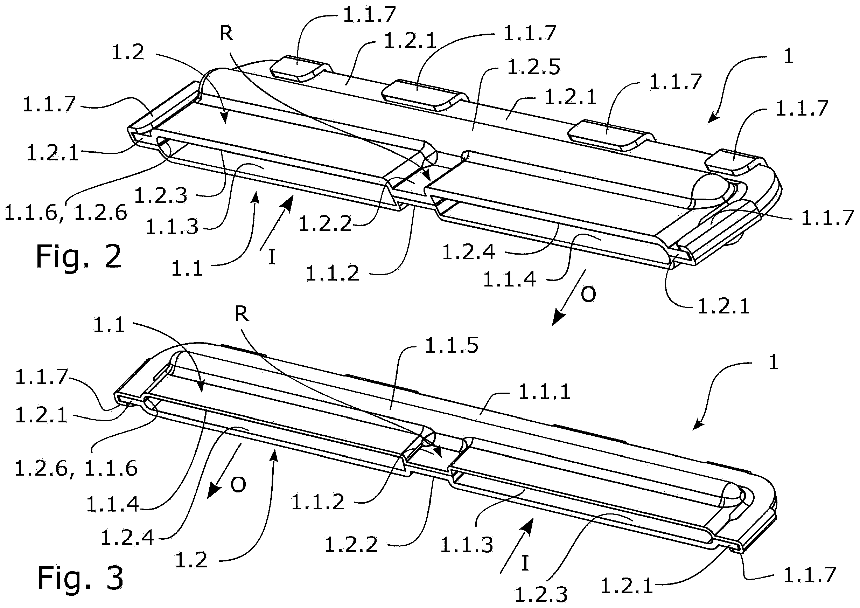

Figure 2 shows a perspective of the manifold from a point of view where the inlet port (I) and outlet port (O) are visually accessible. The manifold (1) consists of two parts, a first part (1.1) which in this figure is shown located at the bottom and a second part (1.2) which is attached to the first part (1.1).

In this example of realization a clad welding has been chosen; that is, the first piece (1.1) and the second piece (1.2) are stamped from a cladding sheet so that the surfaces that come into contact between the two pieces are the surfaces where the lower melting temperature layer is located so that, when passing through the furnace, the weld is established.

The first piece (1.1) has a first perimeter seat (1.1.1) and the second piece (1.2) also has a perimeter seat (1.2.1), both perimeter seats (1.1.1, 1.2.1) formed by a flat edge configured so that one (1.1.1) rests on the other (1.2.1). The surfaces in contact, after passing through the furnace give rise to a bonding surface that ensures sealing along the outer perimeter of the manifold (1).

The lower part (1.1) comprises a plurality of flanges (1.1.7) which, in this example of realization are formed by extensions of the first perimeter seat (1.1.1). During assembly and manufacture of the manifold (1), first the first piece (1.1) and the second piece (1.2) are brought together in their final operating position by making the first perimeter seat (1.1.1) and the second perimeter seat (1.2.1) coincide. In this position a deformation force is applied on the flanges (1.1.7) until they (1.1.7) embrace the outer edge of the second perimeter seat (1.2.1) and also contact the surface of the second perimeter seat (1.2.1) opposite the first perimeter seat (1.1.1). In this position the two pieces have a temporary joint that allows their manipulation until passing through the furnace that assures the union by fusion of the clad surfaces.

In this same figure, the inlet port (I) and outlet port (O) are shown as openings with an antagonistic configuration of the shape of the ends of the first conduit (2.1) and the second conduit (2.2) of the tube (2) that enter to establish the junction with the manifold (1).

The first part (1.1) has a seating area (1.1.3) on the inner surface of the inlet port (I) and a seating area (1.1.4) on the inner surface of the outlet port (O). Likewise, in the second part (1.2) has a seating area (1.2.3) on the inner surface of the inlet port (I) and a seating area (1.2.4) on the inner surface of the outlet port (O).

The junction of the areas (1.1.3, 1.2.3) of seating of the inlet port (I) , this junction being understood as the sum of areas, are an internal area of said inlet port (I) in the form of a band perimetrically surrounding a perimeter area (2.5) of the end of the first conduit (1.1) intended for this junction by welding.

Likewise, the union of the areas (1.1.3, 1.2.3) of seat of the outlet port (O), understood this union also as the sum of areas, are an internal area of said inlet port (O) in the form of a band that surrounds perimetrically a perimeter area (2.5) of the end of the first conduit (1.1) intended for this union by welding.

This junction of the tube (2) and the manifold (1) will be discussed later, since it is the junction that can lead to leaks due to the failure of the tightness in the continuity of the internal areas where the welding joint of the first piece and the second piece (1.2) takes place.

Turning now to the separation area between the inlet port (I) and the outlet port (O) a region (R) is shown where the first part (1.1) and the second part (1.2) have a first intermediate area (1.1.2) and a second intermediate area (1.2.2) respectively intended to be joined together also by welding. While in this example the joining by welding has been described, according to other examples the joining is either by cladding or by means of an adhesive.

This region (R) establishes a barrier that in operational mode prevents the passage of cooling fluid and makes the entire flow necessarily pass through the channel (C).

The channel (C) is formed by two expansions surrounding the internal volume of the channel (C), a first expansion (1.1.5) of the first part (1.1) and a second expansion (1.2.5) of the second part so that the configuration of this example of realization of the manifold shows a symmetry with respect to a plane passing through the junction surface between the perimeter seats (1.1.1, 1.2.1) of one and the other part (1.1, 1.2).

In this same figure 2, on the far left and attending to the inner face of the inlet port (I), a line of union between the first piece (1.1) and the second piece (1.2) is observed. In the actual manufacture where a heat exchange tube (2) and a manifold (1) are joined, the union of the first piece (1.1) and the second piece (1.2) is made simultaneously with the end of the first conduit (1.1) and the end of the second conduit (1.2) already inserted in the inlet port (I) and the outlet port (O) respectively so that said union line is only visible in this case that the tube (2) is not represented.

However, since the heat exchange tube (2) is not shown, there is visual access to this joint line which is covered by the entire joint surface in the form of a closed perimeter band established with the perimeter area (2.5) of the tube (2). It is this line shown which is formed by two radius of transition, a radius of transition of the first piece (1.1) and another radius of transition of the second piece (1.2). According to a preferred example, these radius of transition are greatly reduced by generating an edge (1.1.6) on the first piece (1.1) and an edge (1.2.6) on the second piece (1.2.6) where both edges are achieved by local deformation applied during manufacture in a stamping process by additionally applying force to the movable parts with respect to the stamping dies (not shown in the figures) which exert an additional stamping force until sufficient plastic deformation is achieved to generate the edges (1.1.6, 1.2.6).

Although this detail is shown in figure 2, it is possible to include this solution according to different examples of realization, on the other side as well as in the central zone. In any of the junction areas where the three pieces converge, the first piece (1.1), the second piece (1.2) and the tube (2).

Figure 3 shows a perspective view, but now in the figure it is the first part (1.1) that is positioned at the top in such a way that it can be seen how the tabs (1.1.7) extend downward to embrace the flattened section that forms the second perimeter seat (1.2.1) of the second part (1.2).

It is also observed the expansion (1.1.5) of the first piece (1.1) generating a symmetrical configuration with respect to a central plane containing the main plane of the inlet port (I) and the outlet port (O), the central plane coinciding with the central plane that would have the tube (2) plane not represented in this figure 3 or in figure 2.

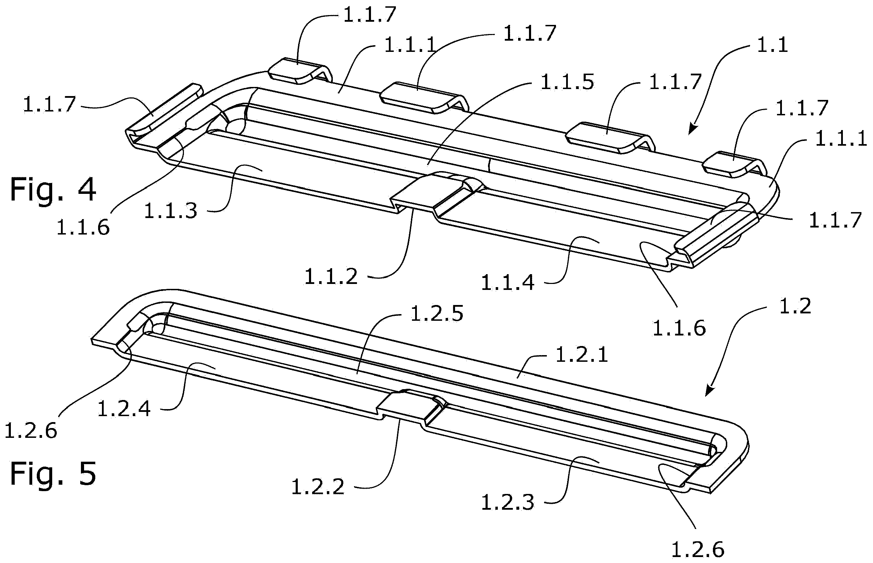

Figures 4 and 5 show the first part (1.1) and the second part (1.2) respectively from the inner side and, in the case of Figure 4, with the tabs (1.1.7) already bent.

This figure shows the channel (C) in both parts with the cavity that forms the expanded (1.1.5, 1.2.5) where in the perimeter zone that connects in the form of transition with the perimeter seat (1.1.1, 1.2.1) there is a wedged area where, during the joining process any migration of material can be received without invading excessively the interior volume of the channel (C). This is the case of molten metal in brazing or clad welding or with excess adhesive if this is the joining method.

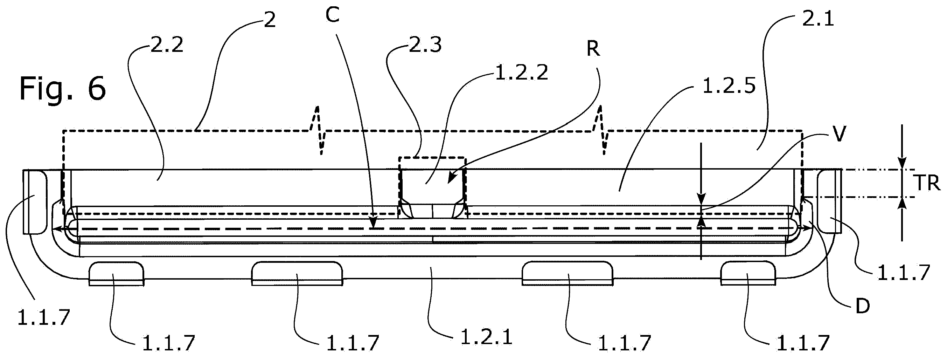

Also seen in these figures, Figure 4 and Figure 5 is the section along which the plastic deformation extends which generates an edge (1.1.6, 1.2.6) located only along a length that is less than the length entering the ends of the first and second conduit (2.1, 2.2) respectively as shown in the view of Figure 6.

Figure 6 shows the manifold (1) with a plan orientation, as well as a schematic of the end of the pipe (2) shown with dashed line to observe how far the ends of the first conduit (2.1) and the second conduit (2.2) reach.

In particular the length of the edge (1.1.6, 1.2.6) generated by plastic deformation extends a length that in Figure 6 has been identified as TR. In this way, up to the end of the first conduit (2.1) and the second conduit (2.2) the absence of this plastic deformation generates a free space (D) that allows the deposit of the excess material that migrates in the fusion process if the joint is by brazing or clad welding or, the adhesive that migrates if the joint is by adhesive.

In this figure another distance, the distance between the end of the first conduit (2.1) or the end of the second conduit (2.2) with the inner surface or seating area (1.1.3, 1.1.4, 1.2.3, 1.2.4) of its corresponding port, the inlet port (I) or outlet port (O) respectively, which serves as a seat for the joint between the two parts, or the joint between the first part (1.1) and the conduit (2.1, 2.2) or between the second part (1.2) and the conduit (2.1, 2.2).

Therefore, this distance V results in a distance at which the end of the first conduit (2.1) the end of the second conduit (2.2) are cantilevered with respect to the inner space of the channel (C) resulting in a distance between the channels forming the first and second conduit (2.1, 2.2) and any joining surface with such conduits which is where the occurrence of excess material migrated from the joint and which could occlude such channels.

This solution has proven to be very effective and to ensure the lack of occlusion in the face of migration, which is not always a parameter that is totally under control in a real manufacturing process.

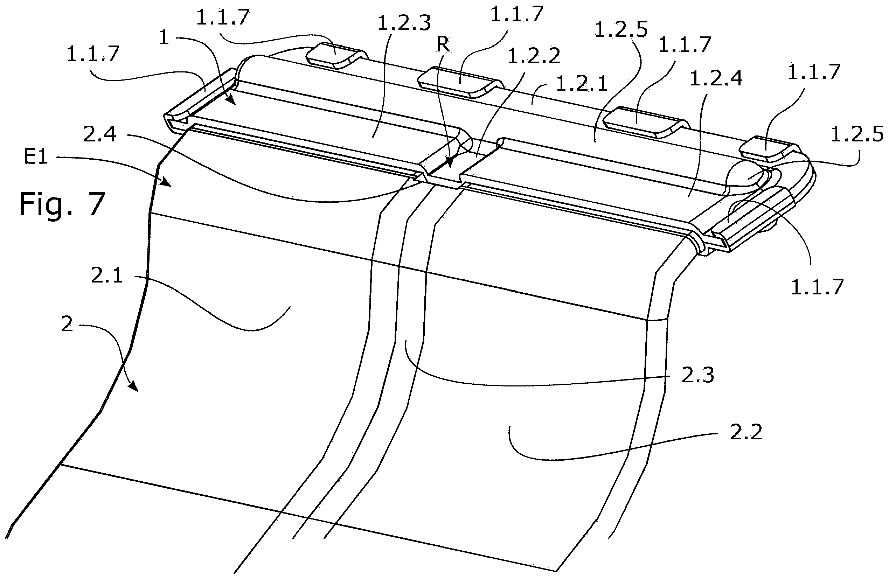

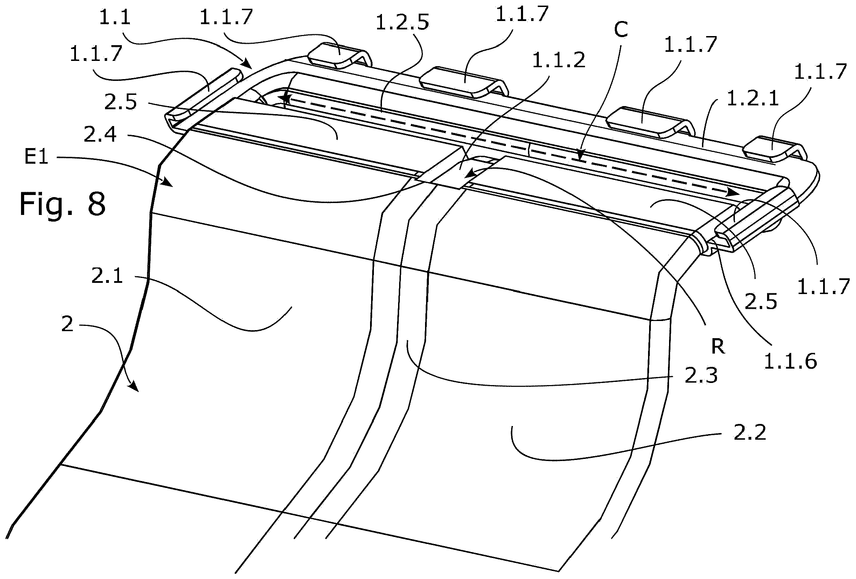

Figure 7 and Figure 8 show both the tube (2) and the manifold (1) attached to the first end (E1) of the heat exchange tube (2) and in the same orientation. Figure 7 shows the complete assembly and in Figure 8 the first piece (1.1) has been removed to allow observation of the interior and in particular the junction between the ends of the conduits (2.1, 2.2) at their corresponding seats (1.1.3, 1.1.4, 1.2.3, 1.2.4).

Figure 7 also shows the region (R) in which the first intermediate area (1.1.2) of the first part (1.1) has a lowered position to contact and join the second intermediate area (1.2.2) of the second part (1.2).

It is in figure 8 where on the right is shown the edge (1.1.6) of the first piece (1.1) which is girded against the lateral outer surface of the end of the conduit (2.1, 2.2) tube (2), in this example of rounded realization and is also part of the perimeter area of the tube (2) since it is part of the area involved in the joint.

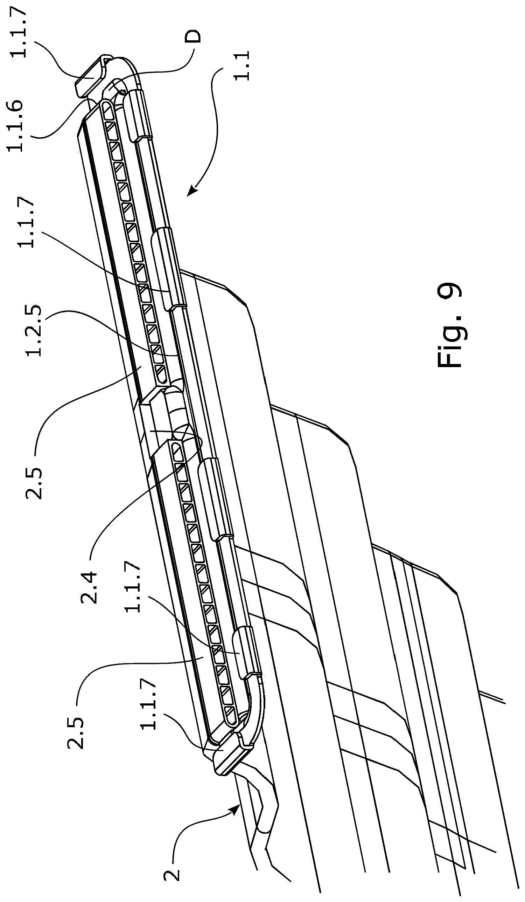

Figure 9 shows the same configuration of figure 8, the manifold with the second piece (1.2) removed to allow visual access to the interior, where it is easier to perceive both the cantilevered condition of the ends of the first conduit (2.1) and of the second conduit (2.2) as well as the formation of a free space (D) following the edge (1.1.6) of the first piece since the length of the edge (1.16) is less than the length at which the conduit (2.1, 2.2) enters the corresponding port (I, O) reaching the interior of the chamber (C).

## Claims

1. Heat exchange module comprising a heat exchange tube (2) and a manifold (1) attached at one of its ends to, in operating mode, establish the transfer of coolant between a first conduit (2.1) and a second conduit (2.2);
wherein the heat exchange tube (2) comprises:
- a first conduit (2.1) for the outgoing flow located on one side of the tube (2), the first conduit (2.1) having a flat configuration according to its cross section;
- a second conduit (2.2) for the return flow located on the other side of the tube (2), the second conduit (2.2) having a flat configuration according to its cross section;
wherein the first conduit (2.1) and the second conduit (2.2) are arranged adjacent and mechanically joined by means of an intermediate section (2.3) configuring a tube (2) of flat configuration according to its cross section wherein the tube (2) extends longitudinally between a first end (E1) and a second end (E2) according to a trajectory (P), and;
wherein at least one end (E1) of the tube (2) has a configuration adapted to be attached to the manifold (1) which is configured to exchange fluid with the first conduit (2.1) and with the second conduit (2.2), wherein:
- the intermediate section (2.3) has its end recessed (2.4) with respect to one end of the first conduit (2.1) and recessed (2.4) with respect to one end of the second conduit (2.2) so that the end of the first conduit (2.1) and the end of the second conduit (2.2) have a perimeter area (2.5) separated from the end of the intermediate section (2.3) and configured for connection with the manifold (1);
wherein the manifold (1) is suitable for bringing the first flow conduit (2.1) into fluidic communication with the second return flow conduit (2.2) of the tube (2), wherein the manifold (1) comprises:
- a first part (1.1) formed by deformation of a sheet metal;
- a second part (1.2) configured by deformation of a sheet metal, attached to the first part (1.1);
wherein the manifold (1) comprises
- an inlet port (I) configured to receive the first conduit (2.1) for the inlet flow; and;
- an outlet port (O) configured to receive the second conduit (2.2) for the return flow;
and wherein the manifold (1) comprises a channel (C) formed either by expansion (1.1.5) of the first part (1.1), or by expansion (1.2.5) of the second part (1.2), or by expansion (1.1.5, 1.2.5) of both parts (1.1, 1.2), wherein the channel (C) communicates the inlet port (I) with the outlet port (O);
wherein either the end of the first conduit (2.1), or the end of the second conduit (2.2) or both ends (2.1, 2.2) enter the interior of the channel (C) of the manifold resulting in a cantilevered section to avoid at least partial occlusion of the conduit(s) (2.1, 2.2).

2. Heat exchange module according to claim 1, wherein the first part (1.1) of the manifold (1) comprises a first perimeter seat (1.1.1) and the second part (1.2) of the manifold (1) comprises a second perimeter seat (1.2.1) wherein the first perimeter seat (1.1.1) of the manifold (1) is attached to the second perimeter seat (1.2.1) establishing the seal in a perimeter zone of the manifold (1).

3. Heat exchange module according to claim 1 or 2, wherein
- the manifold (1) comprises a contact region (R) in which a first intermediate area (1.1.2) of the first part (1.1) is joined to a second intermediate area (1.2.2) of the second part (1.2); and wherein,
- the contact region (R) is configured to be at least partially lodged in the recessed (2.4) end of the intermediate section (2.3) of the tube (2).

4. Heat exchange module according to any of the preceding claims, wherein the channel (C) of the manifold (1) is configured by the expansion (1.1.5, 1.2.5) of both the first part (1.1) and the second part (1.2), both expansions coinciding according to a projection on a plane of union of the first part (1.1) and the second part (1.2) to configure between them a channel (C).

5. Heat exchange module according to any of the preceding claims, wherein the length of the channel (C) of the manifold (1) is greater than the width of the tube (2).

6. Heat exchange module according to any of the preceding claims, wherein at least the first part (1.1) of the manifold (1) comprises flanges (1.1.7) that embrace the second seat (1.2.1) of the second part (1.2).

7. Heat exchange module according to claim any of the previous claims, wherein the perimeter area (2.5) of the heat exchange tube (2) is continuous along a perimeter path.

8. Heat exchange module according to any of the previous claims, wherein the path (P) of the heat exchange tube (2) is either straight or wavy.

9. Heat exchange module according to any of the previous claims, wherein the first conduit (2.1), the second conduit (2.2) or both conduits (2.1, 2.2) of the heat exchange tube (2) comprise a plurality of internal channels.

10. Heat exchange module according to any of the previous claims, wherein the first conduit (2.1), the second conduit (2.2) or both conduits (2.1, 2.2) of the heat exchange tube (2) have a cross section delimited by two parallel straight lines separated from each other and connected at their ends by two curved sections.

## Patentansprüche

1. Wärmetauschermodul, umfassend ein Wärmetauscherrohr (2) und eine an einem seiner Enden befestigte Verteilereinrichtung (1) zur Ausbildung einer Übertragung von Kühlmittel zwischen einer ersten Leitung (2.1) und einer zweiten Leitung (2.2) im Betriebszustand;
wobei das Wärmetauscherrohr (2) umfasst:
- eine auf einer Seite des Rohrs (2) angeordnete erste Leitung (2.1) für den Abfluss, wobei die erste Leitung (2.1) bezogen auf ihren Querschnitt flach konfiguriert ist;
- eine auf der anderen Seite des Rohrs (2) angeordnete zweite Leitung (2.2) für den Rückfluss, wobei die zweite Leitung (2.2) bezogen auf ihren Querschnitt flach konfiguriert ist;
wobei die erste Leitung (2.1) und die zweite Leitung (2.2) nebeneinander angeordnet sind und über einen Zwischenabschnitt (2.3) mechanisch verbunden sind, so dass ein bezogen auf seinen Querschnitt flach konfiguriertes Rohr (2) konfiguriert ist, wobei sich das Rohr (2) bezogen auf einen Verlauf (P) längs zwischen einem ersten Ende (E1) und einem zweiten Ende (E2) erstreckt, und; wobei mindestens ein Ende (E1) des Rohrs (2) an der Verteilereinrichtung (1) befestigbar ist, die zum Austausch von Fluid mit der ersten Leitung (2.1) und mit der zweiten Leitung (2.2) konfiguriert ist, wobei:
- der Zwischenabschnitt (2.3) an seinem Ende gegenüber einem Ende der ersten Leitung (2.1) vertieft (2.4) ist und gegenüber einem Ende der zweiten Leitung (2.2) vertieft (2.4) ist, so dass das Ende der ersten Leitung (2.1) und das Ende der zweiten Leitung (2.2) einen von dem Ende des Zwischenabschnitts (2.3) getrennten Umfangsbereich (2.5) aufweisen und der zur Verbindung mit der Verteilereinrichtung (1) konfiguriert ist;
wobei die Verteilereinrichtung (1) geeignet ist, die erste Strömungsleitung (2.1) in fluidischer Kommunikation mit der zweiten Rückströmungsleitung (2.2) des Rohrs (2) zu verbinden, wobei die Verteilereinrichtung (1) umfasst:
- ein durch Umformung eines Blechs gebildetes erstes Teil (1.1);
- ein durch Umformung eines Blechs gebildetes zweites Teil (1.2), das an dem ersten Teil (1.1) befestigt ist;
wobei die Verteilereinrichtung (1) umfasst
- einen Einlassanschluss (I), der konfiguriert ist, zur Aufnahme der ersten Leitung (2.1) für einen Zufluss; und;
- einen Auslassanschluss (O), der konfiguriert ist, zur Aufnahme der zweiten Leitung (2.2) für den Rückfluss;
und wobei die Verteilereinrichtung (1) einen durch eine Aufweitung (1.1.5) des ersten Teils (1.1) oder durch eine Aufweitung (1.2.5) des zweiten Teils (1.2) oder durch eine Aufweitung (1.1.5, 1.2.5) beider Teile (1.1, 1.2) gebildeten Kanal (C) umfasst, wobei der Kanal (C) den Einlassanschluss (I) mit dem Auslassanschluss (O) verbindet;
wobei das Ende der ersten Leitung (2.1) oder das Ende der zweiten Leitung (2.2) oder beide Enden (2.1, 2.2) zur Vermeidung eines zumindest teilweisen Verschlusses der Leitung(en) (2.1, 2.2) unter Ausbildung eines ausgekragten Abschnitts in das Innere des Kanals (C) der Verteilereinrichtung eintreten.

2. Wärmetauschermodul nach Anspruch 1, wobei das erste Teil (1.1) der Verteilereinrichtung (1) ein erster Umfangssitz (1.1.1) umfasst und das zweite Teil (1.2) der Verteilereinrichtung (1) ein zweiter Umfangssitz (1.2.1) umfasst, wobei der erste Umfangssitz (1.1.1) der Verteilereinrichtung (1) unter Ausbildung einer Abdichtung in einem Umfangsbereich der Verteilereinrichtung (1) an der zweiten Umfangssitz (1.2.1) befestigt ist.

3. Wärmetauschermodul nach Anspruch 1 oder 2, wobei
- die Verteilereinrichtung (1) eine Kontaktregion (R) umfasst, in der ein erster Zwischenbereich (1.1.2) des ersten Teils (1.1) an einem zweiten Zwischenbereich (1.2.2) des zweiten Teils (1.2) anliegt; und wobei,
- die Kontaktregion (R) zumindest teilweise in dem vertieften (2.4) Ende des Zwischenabschnitts (2.3) des Rohrs (2) aufnehmbar ist.

4. Wärmetauschermodul nach einem der vorhergehenden Ansprüche, wobei der Kanal (C) der Verteilereinrichtung (1) durch die Aufweitung (1.1.5, 1.2.5) sowohl des ersten Teils (1.1) als auch des zweiten Teils (1.2) konfiguriert ist, wobei sich beide Aufweitungen in Projektion einer Verbindungsebene des ersten Teils (1.1) und des zweiten Teils (1.2) überdecken, so dass zwischen ihnen ein Kanal (C) konfiguriert ist.

5. Wärmetauschermodul nach einem der vorhergehenden Ansprüche, wobei die Länge des Kanals (C) der Verteilereinrichtung (1) größer als die Breite des Rohrs (2) ist.

6. Wärmetauschermodul nach einem der vorhergehenden Ansprüche, wobei zumindest das erste Teil (1.1) der Verteilereinrichtung (1) Flansche (1.1.7) umfasst, welche den zweiten Sitz (1.2.1) des zweiten Teils (1.2) umgreifen.

7. Wärmetauschermodul nach einem der vorhergehenden Ansprüche, wobei der Umfangsbereich (2.5) des Wärmetauscherrohrs (2) entlang eines Umfangsverlaufs durchgängig ist.

8. Wärmetauschermodul nach einem der vorhergehenden Ansprüche, wobei der Verlauf (P) des Wärmetauscherrohrs (2) gerade oder wellenförmig ist.

9. Wärmetauschermodul nach einem der vorhergehenden Ansprüche, wobei die erste Leitung (2.1), die zweite Leitung (2.2) oder beide Leitungen (2.1, 2.2) des Wärmetauscherrohrs (2) eine Vielzahl von Innenkanälen umfassen.

10. Wärmetauschermodul nach einem der vorhergehenden Ansprüche, wobei die erste Leitung (2.1), die zweite Leitung (2.2) oder beide Leitungen (2.1, 2.2) des Wärmetauscherrohrs (2) einen Querschnitt aufweisen, der durch zwei voneinander getrennte, parallele, gerade Linien definiert ist, die an ihren Enden durch zwei gekrümmte Abschnitte verbunden sind.

## Revendications

1. Module d'échange de chaleur comprenant un tube d'échange de chaleur (2) et un collecteur (1) fixé à l'une de ses extrémités pour, en mode de fonctionnement, établir le transfert d'un fluide de refroidissement entre un premier conduit (2.1) et un second conduit (2.2) ;
dans lequel le tube d'échange de chaleur (2) comprend :
- un premier conduit (2.1) pour l'écoulement sortant, situé d'un côté du tube (2), le premier conduit (2.1) ayant une configuration plate en fonction de sa section transversale ;
- un second conduit (2.2) pour l'écoulement de retour, situé de l'autre côté du tube (2), le second conduit (2.2) ayant une configuration plate en fonction de sa section transversale ;
dans lequel le premier conduit (2.1) et le second conduit (2.2) sont agencés adjacents et assemblés mécaniquement au moyen d'une section intermédiaire (2.3) configurant un tube (2) de configuration plate en fonction de sa section transversale, dans lequel le tube (2) s'étend longitudinalement entre une première extrémité (E1) et une seconde extrémité (E2) selon une trajectoire (P), et ;
dans lequel au moins une extrémité (E1) du tube (2) a une configuration adaptée pour être fixée au
collecteur (1) qui est configuré pour échanger du fluide avec le premier conduit (2.1) et avec le second conduit (2.2), dans lequel :
- la section intermédiaire (2.3) a son extrémité évidée (2.4) par rapport à une extrémité du premier conduit (2.1) et évidée (2.4) par rapport à une extrémité du second conduit (2.2) de sorte que l'extrémité du premier conduit (2.1) et l'extrémité du second conduit (2.2) ont une zone périmétrique (2.5) séparée de l'extrémité de la section intermédiaire (2.3) et configurée pour un raccordement au collecteur (1) ;
dans lequel le collecteur (1) est adapté pour mettre le premier conduit d'écoulement (2.1) en communication fluidique avec le second conduit d'écoulement de retour (2.2) du tube (2), dans lequel le collecteur (1) comprend :
- une première partie (1.1) formée par déformation d'une tôle métallique ;
- une seconde partie (1.2) configurée par déformation d'une tôle métallique, fixée à la première partie (1.1) ;
dans lequel le collecteur (1) comprend
- un orifice d'entrée (I) configuré pour recevoir le premier conduit (2.1) pour l'écoulement d'entrée ; et ;
- un orifice de sortie (O) configuré pour recevoir le second conduit (2.2) pour l'écoulement de retour ;
et dans lequel le collecteur (1) comprend un canal (C) formé soit par expansion (1.1.5) de la première partie (1.1), soit par expansion de la seconde partie (1.2), soit par expansion (1.1.5, 1.2.5) des deux parties (1.1, 1.2), dans lequel le canal (C) fait communiquer l'orifice d'entrée (I) avec l'orifice de sortie (O) ;
dans lequel l'extrémité du premier conduit (2.1) ou l'extrémité du second conduit (2.2) ou les deux extrémités (2.1, 2.2) pénètrent à l'intérieur du canal (C) du collecteur, le résultat étant une section en porte-à-faux pour éviter une occlusion au moins partielle du (des) conduit(s) (2.1, 2.2).

2. Module d'échange de chaleur selon la revendication 1, dans lequel la première partie (1.1) du collecteur (1) comprend un premier siège périmétrique (1.1.1) et la seconde partie (1.2) du collecteur (1) comprend un second siège périmétrique (1.2.1), dans lequel le premier siège périmétrique (1.1.1) du collecteur (1) est fixé au second siège périmétrique (1.2.1) en établissant le joint dans une zone périmétrique du collecteur (1).

3. Module d'échange de chaleur selon la revendication 1 ou 2, dans lequel
- le collecteur (1) comprend une région de contact (R) dans laquelle une première zone intermédiaire (1.1.2) de la première partie (1.1) est reliée à une seconde zone intermédiaire (1.2.2) de la seconde partie (1.2) ; et dans lequel
- la région de contact (R) est configurée pour être logée au moins partiellement dans l'extrémité évidée (2.4) de la section intermédiaire (2.3) du tube (2).

4. Module d'échange de chaleur selon l'une quelconque des revendications précédentes, dans lequel le canal (C) du collecteur (1) est configuré par l'expansion (1.1.5, 1.2.5) à la fois de la première partie (1.1) et de la seconde partie (1.2), les deux expansions coïncidant suivant une projection sur un plan de réunion de la première partie (1.1) et de la seconde partie (1.2) pour configurer un canal (C) entre elles.

5. Module d'échange de chaleur selon l'une quelconque des revendications précédentes, dans lequel la longueur du canal (C) du collecteur (1) est supérieure à la largeur du tube (2).

6. Module d'échange de chaleur selon l'une quelconque des revendications précédentes, dans lequel au moins la première partie (1.1) du collecteur (1) comprend des rebords (1.1.7) qui entourent le second siège (1.2.1) de la seconde partie (1.2).

7. Module d'échange de chaleur selon l'une quelconque des revendications précédentes, dans lequel la zone périmétrique (2.5) du tube d'échange de chaleur (2) est continue le long d'un trajet périmétrique.

8. Module d'échange de chaleur selon l'une quelconque des revendications précédentes, dans lequel le trajet (P) du tube d'échange de chaleur (2) est rectiligne ou ondulé.

9. Module d'échange de chaleur selon l'une quelconque des revendications précédentes, dans lequel le premier conduit (2.1), le second conduit (2.2) ou les deux conduits (2.1, 2.2) du tube d'échange de chaleur (2) comprennent une pluralité de canaux internes.

10. Module d'échange de chaleur selon l'une quelconque des revendications précédentes, dans lequel le premier conduit (2.1), le second conduit (2.2) ou les deux conduits (2.1, 2.2) du tube d'échange de chaleur (2) ont une section transversale délimitée par deux lignes droites parallèles séparées l'une de l'autre et reliées à leurs extrémités par deux sections courbes.
